# EUROPEAN PATENT APPLICATION

(11) **EP 1 363 455 A2**
(43) Date of publication of application: **19.11.2003**
(21) Application number: 03010686.8
(22) Date of filing: 13.05.2003
(51) Int. Cl.: H04N 7/088, H04N 5/445

(54) **Caption extraction device**

(30) Priority: 16.05.2002 JP 2002142188
(71) Applicant: SEIKO EPSON CORPORATION, Shinjuku-ku, Tokyo 163-0811 (JP)
(72) Inventor: Nagaishi, Michihiro, Suwa-shi, Nagano-ken 392-8502 (JP); Yamada, Mitsuho, NHK Science & Techn. Research Lab, Tokyo (JP); Sakai, Takahiro, NHK Science & Techn. Research Lab, Tokyo (JP); Shimizu, Toshihiro, NHK Science&Techn.Research Lab, Tokyo (JP); Kawai, Naoki, NHK Science & Techn. Research Labor., Tokyo (JP)
(74) Representative: Hoffmann, Eckart, Dipl.-Ing.

(57) **Abstract**

A caption extraction device is provided that is able to provide caption information itself embedded in video contents, and use this caption information to support the activities of physically challenged persons and so forth. A caption extraction device that extracts caption information from video signals is provided with a caption extraction unit (1b) which extracts superimposed captions from video signals actually broadcast or played back, a character recognition unit (1c) which recognizes character strings contained in the superimposed captions which have been extracted on a real-time basis, and outputs character information containing character codes corresponding to the recognized character strings, and a display unit (1f) which displays the character strings contained in the superimposed captions based on the character information.

## Description

### BACKGROUND OF THE INVENTION

### Field of the Invention

The present invention relates to a caption extraction device which extracts caption information from a video signal from a television, a video tape recorder, and so forth, and outputs that caption information.

### Description of the Related Art

A large amount of valuable information is contained in the captions inserted in the video signals of television broadcasts and so forth. Therefore, numerous attempts have been made to extract and use the information contained these captions. Although character information in addition to the picture is transmitted in BS (Broadcast Satellite) digital broadcasting and CS (Communications Satellite) digital broadcasting, since these are technologies that have just begun to become popular, there are many cases in which adequate information is not yet contained in those broadcasts. In addition, although there are also methods for broadcasting caption information as separate data of character broadcasts (character data) in the case of current broadcasting, such methods have not yet to become popular.

On the other hand, superimposed captions embedded as a portion of the video signal are a means that allow information to be easily inserted by the producer, and are widely used in numerous broadcast programming and video media. Thus, the utilization of caption information embedded as a part of the video signal is currently very important.

Since captions typically consist of information that summarizes the video contents, they are an important information source for persons with minor vision impairment such as amblyopia or hearing impairment. Therefore, devices for character broadcasts have been invented that extract the character data used for captions (caption data) and provide an enlarge display of the contents of those captions on a different terminal (for example, the device disclosed in Japanese Unexamined Patent Application, First Publication No. 2001-024964). On the other hand, methods have also been examined for searching and classifying video contents based on superimposed captions. For example, technology is disclosed in Japanese Unexamined Patent Application, First Publication No. Hei 07-192003 or Japanese Unexamined Patent Application, First Publication No. Hei 10-308921 that allows searches to be made of video contents using captions contained in accumulated video contents as a video index. In addition, Japanese Unexamined Patent Application, First Publication No. Hei 10-092052 discloses technology relating to a special program identification device that retains patterns of text and video contents such as commercials and program time changes, extracts the text patterns of commercial titles and program time changes contained in video contents, and by then comparing with the retained patterns, identifies commercials (special programs) so that video contents can be recorded while cutting out the commercials enabling those contents to be viewed while skipping past the commercials.

However, although the information contained in captions is expected to be used in a diverse manner, a method or means of a form for recognizing the characters of superimposed captions embedded in actual broadcast or played back video contents on a real-time basis so that the recognized caption information itself can be used in a variety of ways has not yet to be proposed.

In the past, methods for utilizing caption information were specialized for searching for video contents or cutting out commercials and so forth, and that information was unable to be used in a universal manner. In addition, although viewers may perform various activities based on the information of superimposed captions (such as placing a telephone call to a telephone number displayed on the screen for television shopping), under the present circumstances, such activities are unable to be supported for vision or hearing impaired persons in particular.

### SUMMARY OF THE INVENTION

In consideration of the above factors, the present invention provides a caption extraction device which is able to provide caption information itself embedded in video signals, and support the activities of physically challenged persons and so forth based on this caption information.

The caption extraction device of the present invention is a caption extraction device that extracts caption information from video signals which is provided with a caption extraction unit which extracts superimposed captions from video signals actually broadcast or played back; a character recognition unit which recognizes character strings contained in the extracted superimposed captions on a real-time basis, and outputs character information containing character codes corresponding to the recognized character strings, and a display unit which displays the character strings based on the character information.

As a result, since superimposed captions are extracted from video signals actually broadcast or played back, character strings contained in the extracted superimposed captions are recognized on a real-time basis, and character information that contains character codes corresponding to the recognized character strings is output, the character information itself of a recognized caption can be used universally. In addition, the caption information itself embedded in video signals can be provided to users on a real-time basis.

In addition, in the caption extraction device of the present invention, each of the above units are all built in a single housing.

As a result of doing so, all functions are housed within a single housing thereby facilitating ease of handling for the user.

In addition, in the caption extraction device of the present invention, an input/output unit may be additionally provided capable of connecting with at least one peripheral device or external communication environment.

As a result of doing so, at least one peripheral device and external communication environment can be used easily.

In addition, in the caption extraction device of the present invention, a character processing unit may also be additionally provided that adds additional information for processing the recognized character strings by enlarging, deforming or coloring and so forth to the character information.

As a result of doing so, since additional information for processing the recognized character strings by enlarging, deforming or coloring and so forth is added to the character information, the display unit displays the character strings that have been processed by enlarging, deforming, or coloring based on character information in which additional information has been added by the character processing unit. Thus, caption information can be provided in a suitable form to users in a form that is legible to users, and particularly vision impaired users and so forth.

In addition, the caption extraction device of the present invention may be made to be a separate entity from a display device such as a television receiver that displays video contents according to video signals.

In this manner, since the caption extraction device of the present invention is made to be a separate entity from a display device such as a television receiver, the caption extraction device of the present invention can be arranged within reach of the user, thereby allowing the user to perform all operations locally. Thus, caption information can be output within reach of the user, thereby assisting the user in cases in which the user has minor vision impairment.

In addition, the caption extraction device of the present invention may be additionally provided with a voice synthesis unit that synthesizes a voice from character codes recognized by the character recognition unit and outputs synthesized voice signals.

In this manner, by providing this voice synthesis unit, caption information can be provided by voice even if the user has severe vision impairment.

In addition, the caption extraction device of the present invention may be additionally provided with a color information extraction unit that acquires color information of the superimposed captions, and the voice synthesis unit may synthesize a voice so as to distinguish among men, women, adults, children or elderly persons and so forth either based on the color information of superimposed captions acquired with the color information extraction unit, or based on characters and symbols pre-inserted into superimposed captions which are recognized with the character recognition unit.

As a result of doing so, the synthesized voice is no longer a simple inanimate voice. In addition, if differences among men, women, adults, children, elderly persons and so forth are defined with different colors or specific characters and symbols of the superimposed captions, and superimposed captions are inserted using such colors or characters and symbols by the video producer, the caption extraction device of the present invention is able to represent differences among men, women, adults, children, elderly persons and so forth with the synthesized voice, thereby making it possible to provide assistance to users when viewing and listening caption information.

In addition, in the caption extraction device of the present invention, the voice synthesis unit may be made to perform voice synthesis that gives characteristics similar to the characteristics of voices output when the superimposed captions are displayed.

As a result of doing so, not only is the synthesized voice no longer a simple inanimate voice, but since it also resembles the characteristics of the voice of the performer, users are able to listen the caption information in a natural manner.

As has been described above, since a voice is synthesized from caption information and that voice is output while changing the voice quality corresponding to the conditions, in addition to providing caption information visually, caption information can also be provided by voice. Therefore, information becomes more effective for both unimpaired and physically challenged persons.

In addition, in the caption extraction device of the present invention, the character information may be imparted to a Braille output unit to provide a Braille output.

The providing of a Braille output of caption information in this manner makes it possible to assist persons with severe vision impairment.

In addition, in the caption extraction device of the present invention, the Braille output unit may be a Braille keyboard.

As a result of doing so, the present invention provides assistance for persons with severe vision impairment.

In addition, in the caption extraction device of the present invention, the Braille output unit may be a Braille printer.

As a result of doing so, the present invention provides additional assistance for persons with severe vision impairment.

In addition, in the caption extraction device of the present invention, a judgment unit may be additionally provided that automatically determines scenes in which a specified keyword appears by searching for the specified keyword from among the character information.

As a result of doing so, a scene in which a desired keyword appears can be searched for automatically.

In addition, in the caption extraction device of the present invention, a control unit may be provided that records the time of appearance of a scene in which the keyword was detected by the judgment unit onto a recording unit.

As a result of doing so, assistance is provided for identifying the detected scene according to its time of appearance.

In addition, in the caption extraction device of the present invention, a control unit may be provided that records a scene in which the keyword has been detected by the judgment unit onto a picture recording unit.

As a result of doing so, in the case video contents are present that contain a specified (registered) keyword, since those video contents are recorded automatically, users are able to view video contents they are interested in but either missed or forgot to watch, thereby being beneficial for users.

In addition, the caption extraction device of the present invention, a control unit may be provided that controls a unit for outputting character information in response to the detection of a predetermined character string.

As a result of doing so, various controls can be performed for the unit for outputting character information in response to the detection of a character string.

In addition, in the caption extraction device of the present invention, the predetermined character string may be a program starting character string or program ending character string, and the control unit may impart a command to perform programmed recording or recording a program to a picture recording unit in accordance with the predetermined character string.

By doing so, as a result of the broadcasting station inserting the character string in the form of caption information, and the user utilizing this caption information, recording of a program (or programmed recording) can be performed without having to make so-called recording settings.

In addition, in the caption extraction device of the present invention, the predetermined character string may be an address or postal number, and the control unit may cause the address or the postal number to be printed out by a printing unit.

Since addresses or postal numbers displayed in captions may be useful to users, by controlling in this manner, a displayed address or postal number is printed out automatically, which is beneficial for users.

In addition, in the caption extraction device of the present invention, the predetermined character string may be a postal number, and when the postal number is detected, the control unit may search and acquire an address corresponding to the postal number in an address database that is correlated with postal numbers, and causes the acquired address may then be printed out by a printing unit.

As a result of doing so, the corresponding address is printed out automatically by simply detecting a postal number, thereby being beneficial for users.

In addition, in the caption extraction device of the present invention, together with being connectable to the Internet, the predetermined character string may be a uniform resource locator (URL), and when the URL is detected, the control unit may access the web page corresponding to the URL and display the contents of the web page on the display unit.

As a result of doing so, related information on the Internet can be referred to automatically.

In addition, in the caption extraction device of the present invention, together with being connectable to a telephone, the predetermined character string may be a telephone number, and when the telephone number is detected, the control unit may call the telephone of the telephone number.

Since telephone numbers displayed in captions may be useful to users (during, for example, telephone shopping), by controlling in this manner, a telephone connection is made automatically to the party of the displayed telephone number, thereby being beneficial for users.

As has been described above, since video recording, accessing a web page on the Internet or making a telephone connection and so forth in response to a keyword or prescribed character string is performed automatically, the activities of vision or hearing impaired persons in particular can be supported.

### BRIEF DESCRIPTION OF THE DRAWINGS

FIG. 1 is a block drawing showing the configuration of a caption extraction device according to one embodiment of the present invention.
FIG. 2 is a drawing showing a connection example between the caption extraction device of the same embodiment and other equipment.
FIG. 3 is a drawing showing a layout example of the caption extraction device of the same embodiment.
FIG. 4 is a drawing explaining an example of video recording by the caption extraction device of the same embodiment.

### DETAILED DESCRIPTION OF THE PREFERRED EMBODIMENTS

The following provides an explanation of embodiments of the present invention with reference to the drawings.

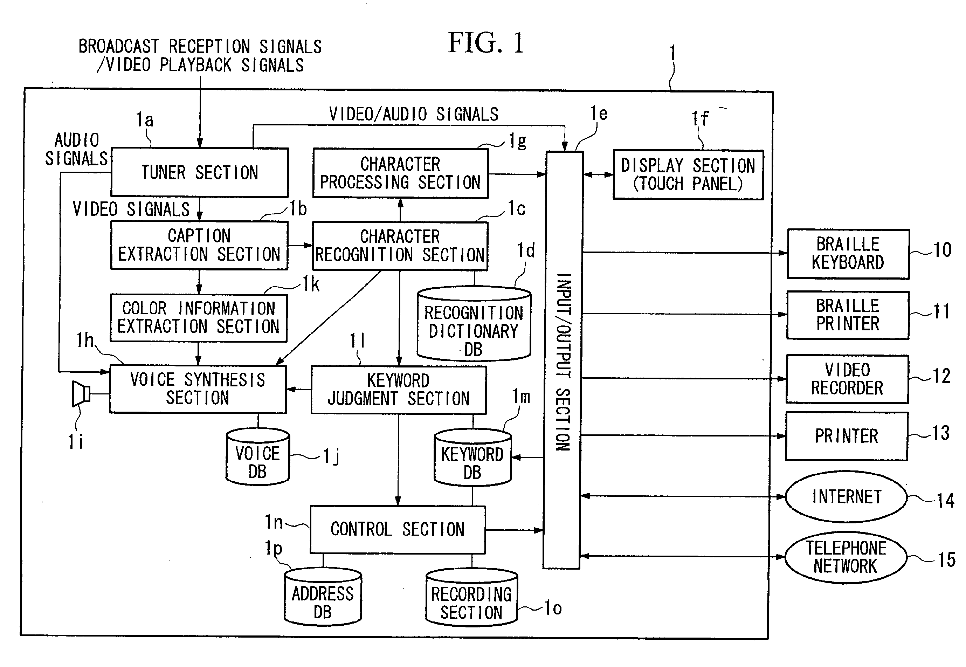

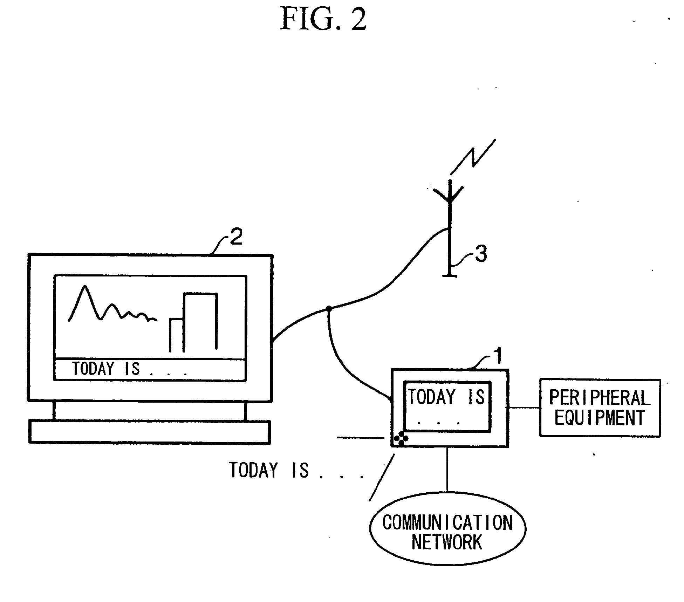

FIG. 1 is a block drawing showing the configuration of a caption extraction device 1 according to one embodiment of the present invention, while FIG. 2 is a drawing showing a connection example between the caption extraction device 1 and other equipment.

As shown in FIG. 2, caption extraction device 1 of the present embodiment is a separate entity from a display device such as television receiver 2, and together with various peripheral devices being connected to this caption extraction device 1, it is also connected to a communication network such as the Internet or a telephone network.

In FIG. 1, reference symbol 1a indicates a tuner section that receives broadcast reception signals/video playback signals and separates and outputs video and audio signals of a selected channel (or input signal).

Reference symbol 1b indicates a caption extraction section that extracts caption portions (superimposed captions) from video signals output by tuner section 1a. Superimposed captions are normally superimposed in a section below video contents, and the caption extraction device according to the present embodiment extracts this section. The extracted caption information is then digitized and imparted to a character recognition section 1c and color information extraction section 1k described below. Furthermore, data imparted to character recognition section 1c uses data that has been converted to binary based on a prescribed threshold with respect to the brightness signal of the superimposed caption portion.

Reference symbol 1 c indicates a character recognition section that recognizes character strings contained in the caption portion extracted with caption extraction section 1b on a real-time basis, and outputs character information containing character codes corresponding to the recognized character string. Furthermore, symbols are also recognized as a type of character. In this character recognition section 1c, sections having a brightness equal to or greater than a prescribed level in a superimposed caption portion extracted with caption extraction section 1b are recognized by treating as characters. Furthermore, characters may be recognized over the entire screen.

Reference symbol 1d indicates a recognition dictionary database (DB) in which a dictionary is contained that is used when recognizing characters by character recognition section 1c. Furthermore, character recognition section 1c can be realized using conventionally known character recognition technology.

Reference symbol 1e indicates an input/output section for connecting to peripheral equipment or an external communication environment. This input/output section 1e has the function of an input/output interface for connecting with peripheral equipment, and satisfies the required specifications corresponding to the connected peripheral equipment. In addition, a telephone function is provided for connecting to a telephone network 15. In addition, a communication function is provided that complies with TCP/IP standards for connecting to Internet 14. Input/output section 1e also performs display control for display section 1f incorporated within caption extraction device 1. Here, peripheral equipment refers to a Braille keyboard 10, a Braille printer 11, a video recorder 12 or a printer 13 and so forth, while a communication environment (communication network) refers to Internet 14 or telephone network 15. Furthermore, display section 1f is a display device such as a liquid crystal display, and may be additionally equipped with a touch panel or other input unit to allow the entry and setting of a keyword and so forth to be described later.

Reference symbol 1g indicates a character processing section that adds additional information (prescribed codes) for processing characters to character information output from character recognition section 1c in the case processing such as enlargement, deformation, coloring and so forth is performed on characters contained in a character string recognized by character recognition section 1c. Characters that are processed here are displayed in an enlarged, deformed, colored or other processed state with display section 1f. Furthermore, in the case not all character strings can be displayed on a single screen, the display is scrolled sequentially.

Reference symbol 1h indicates a voice synthesis section that synthesizes a voice from recognized caption character strings and outputs it from a speaker 1i. In addition, in the case predetermined characters and symbols (and these are considered to be a type of keyword as described below) that have been recognized by character recognition section 1c are inserted into a superimposed caption, a voice is synthesized to as to distinguish between sex and age difference, such as man, woman, adult, child or elderly person, based on this keyword. In this case, although the relevant keyword is notified from a keyword judgment section 11 described below, and a voice is synthesized in the manner described above based on that keyword, a voice is not synthesized from this keyword itself. In addition, in the case color information has been received from a color information extraction section 1k described below, a voice is synthesized in the same manner as described above using tone quality that has been preset according to the color information (for example, using the tone quality of a woman in the case of red color, or using the tone quality of a man in the case of black color).

In addition, voices may also be synthesized using tone qualities having characteristics similar to voices outputted when a superimposed caption is displayed. In this case, the characteristics of the tone quality (such as frequency components) are analyzed from the input audio signal, and a tone quality that most closely resembles this tone quality is selected from a voice database 1j described below to synthesize a voice. In the case, for example, the voice that is output when Japanese language captions are displayed in a foreign movie is the voice of an actress, a voice is synthesized having the tone quality of a woman based on those voice characteristics. Namely, a foreign movie is automatically dubbed into Japanese. Thus, persons with impaired vision can also enjoy foreign movies, and persons with normal vision are not required to take the time to read the captions.

As a result of changing the tone quality in the manner described above, a synthesized voice tending to have an inanimate tone quality can be given a certain degree of personality (listening to a monotone or inanimate voice ends up being tiring). In addition, the colors of character strings and prescribed characters or symbols of superimposed captions can be intentionally selected by the program producer. Namely, the program producer is able to explicitly specify the tone quality that is output with caption extraction device 1. For example, the tone quality used when reading news or commentaries can be intentionally distinguished by synthesizing different voices when they are read. More specifically, different tone qualities can be used for voice synthesis such as by using the tone quality of a young woman's voice for children's programs or using the tone quality of a man's voice for political programs. In addition, in the case of selecting tone quality based on the characteristics of the voice output when superimposed captions are displayed, the program procedure is no longer required to insert the above prescribed characters or symbols that determine tone quality into the superimposed captions.

Furthermore, voice synthesis section 1h can be realized using conventionally known voice synthesis technology.

Reference symbol 1j indicates a voice database (DB) that contains data used for voice synthesis. A plurality of data sets of typical tone qualities determined according to sex, age and so forth (such as data of frequency components that compose voices) are registered in this voice DB 1j, and tone quality is determined during voice synthesis according to each of the above conditions. Alternatively, a tone quality is selected that has characteristics that resemble the characteristics of the voice output when superimposed captions are displayed. Furthermore, this voice DB 1j also contains a table that correlates each of the above conditions (keywords and voice characteristics) with tone quality data, and tone quality data is selected corresponding to those conditions.

Reference symbol 1k indicates a color information extraction section that extracts color information of a character string of a superimposed caption portion extracted with caption extraction section 1b, and imparts that information to voice synthesis section 1h. Here, information that indicates the brightness distribution of the three primary colors is used as color information.

Reference symbol 11 indicates a keyword judgment section that judges whether or not a keyword registered in keyword DB 1m is present in a character string recognized by character recognition section 1c, and automatically determines the scene in which the keyword appears. It also notifies voice synthesis section 1h and control section In of the keyword and the scene corresponding to that keyword. Furthermore, the contents of control processing to be executed by a control section In described below corresponding to a keyword and so forth (including those according to address, postal number, URL and telephone number) are stored in keyword DB 1m corresponding to each keyword.

Reference symbol In indicates a control section that executes corresponding control processing as described below by referring to keyword DB 1m based on a prescribed keyword when that keyword is detected by keyword judgment section 1l and notified of the keyword and so forth (including those according to address, postal number, URL and telephone number) by the keyword judgment section 11.

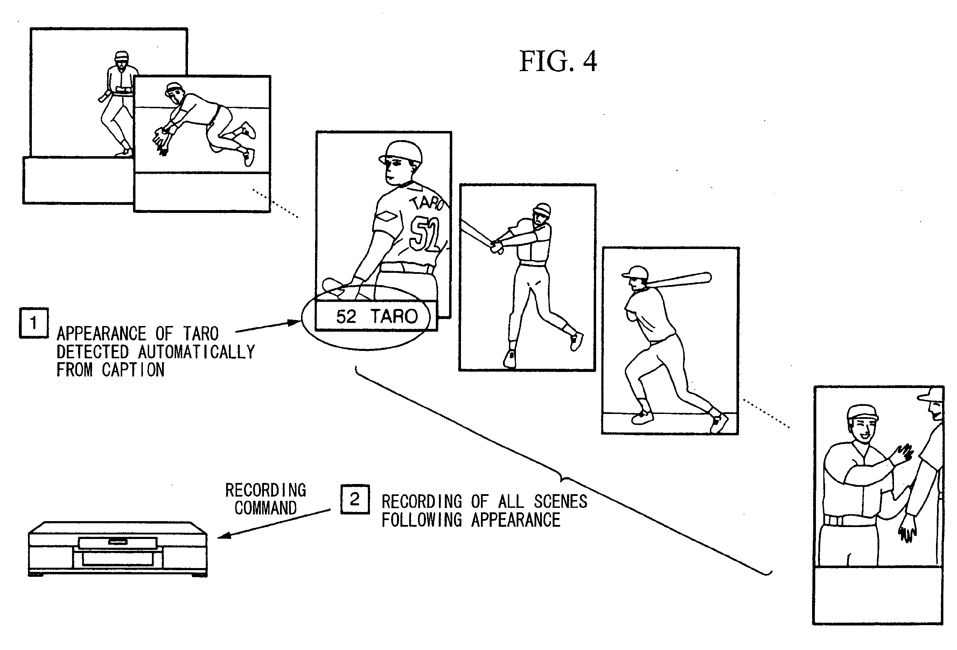

More specifically, control section In stores the time of appearance (starting time) of a scene in which a keyword has been detected in recording section 1o. In addition, when a keyword that has been pre-registered is detected by keyword judgment section 11, video and audio contents are recorded in video recorder 12 for a prescribed time starting with the scene in which the keyword was detected. Alternatively, video and audio contents are recorded from the scene in which the keyword was detected until the time a character string is recognized that differs from the detected keyword. An example of this video recording is shown in FIG. 4. The keyword in this example is TARO, and when TARO is displayed in a superimposed caption, it is detected and scenes following its appearance are recorded for a prescribed time from the time it was detected (when TARO appeared).

In addition, in the case a program starting character string or program ending character string, or character string that specifies the start or end of recording or programmed recording is detected as a keyword, a command to perform programmed recording or record a program is imparted to video recorder 12 in accordance with that character string. A character string consisting of, for example, the name of the program and the word "START" can be used for the above program starting character string, while, for example, the name of the program and the word "END" can be used for the program ending character string.

In addition, in the case of an address or postal number having been detected as a keyword, control section 1n prints out this address or postal number with printer 13. In addition, in the case only a postal number has been detected as a keyword, the corresponding address is acquired by searching through the address database (DB) indicated with reference symbol 1p based on that postal number, and the acquired address is then printed out with printer 13. Furthermore, address DB 1p is a database composed of postal numbers and addresses corresponding to those postal numbers. In addition, in the case a uniform resource locator (URL) has been detected as a keyword, the character string of the URL is extracted from character codes (character information), the web page corresponding to this URL is accessed through input/output section 1e, and the contents of the web page are displayed on display section 1f.

In addition, in the case a telephone number has been detected as a keyword, the character string of a telephone number is similarly detected, and input/output section 1 e is made to call a telephone of the telephone number. Furthermore, judgment as to whether the character string is an address or postal number is made by determining whether or not it is composed of a character string legitimately used as an address or postal number. In addition, whether or not a character string is a URL is determined by whether or not the character string begins with "http://" and has a prescribed structure. In addition, whether or not a character string is a telephone number is determined by whether or not the characters that compose the character string are numbers, contain hyphens that separate the telephone office number, and whether or not a legitimate telephone office number is used and so forth.

Furthermore, recognition dictionary section DB 1d, voice DB 1j, keyword DB 1m, registration section 1o and address DB 1p are composed of a non-volatile recording device such as erasable programmable read-only memory (EPROM) or a hard disk.

In addition, the functions of character recognition section 1c, character processing section 1g, voice synthesis section 1h, color information extraction section 1k, keyword judgment section 11 and control section In are realized by executing with a processing section (not shown) composed of memory, central processing unit (CPU) and so forth by loading a program (not shown) for executing the function of each section into that memory.

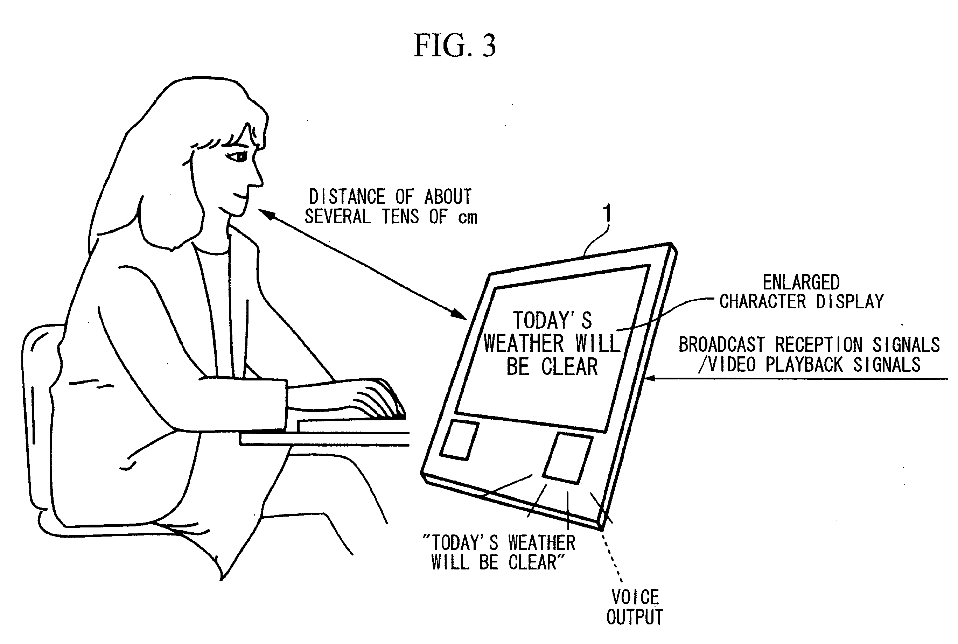

Caption extraction device 1 composed in this manner is a separate entity from television receiver 2 and so forth as previously mentioned. Thus, this caption extraction device 1 can be arranged within reach of a user. Namely, by using caption extraction device 1 of the present embodiment, caption information superimposed on video contents can be output (display and audio output) within reach of a user (see FIG. 3). In addition, since caption extraction device 1 executes the various automated control as previously described, it provides assistance to the user (and particularly persons who are physically challenged).

Next, an explanation is provided of the general operation of caption extraction device 1 of the present embodiment composed in this manner.

A broadcast reception signal received via an antenna 3 (or a video playback signal from a video player (not shown)) is input to caption extraction device 1 in the same manner as a television receiver 2. Tuner section 1a separates and outputs the video and audio signals of a selected channel (or input signal) from the reception signal. The video signal is imparted to caption extraction section 1b, while the audio signal is imparted to voice synthesis section 1h.

Caption extraction section 1b that receives the video signal extracts the superimposed caption portion inserted into the video contents, digitizes it and imparts the data to character recognition section 1c and color information extraction section 1k.

Character recognition section 1c recognizes a character string superimposed as a caption from the caption data received from caption extraction section 1b, and imparts that character code to character processing section 1 g, voice synthesis section 1h and keyword judgment section 11.

Character processing section 1g adds additional information for processing characters corresponding to a setting (enlargement, deformation, coloring, etc.) to character information composed of character codes. The processed character string is then displayed on display section 1f via input/output section le.

On the one hand, when character codes received from character recognition section 1c are detected to contain a registered keyword, keyword judgment section 1l automatically determines (identifies) the scene in which that keyword has been inserted. It then notifies voice synthesis section 1h or control section 1n corresponding to that keyword that the keyword and the scene have appeared.

On the other hand, although voice synthesis section 1h synthesizes a voice based on a character code received from character recognition section 1c and outputs that voice from speaker 1i, when a predetermined keyword is received from keyword judgment section 1l, the tone quality of the voice is changed and output corresponding to that keyword or corresponding to the color of characters contained in the caption (and this color information is provided by color information extraction section 1k).

In addition, when control section 1n receives a keyword and so forth (prescribed character string) from keyword judgment section 11, it executes various types of predetermined control processing as previously mentioned corresponding to that keyword.

The above has provided an explanation of the operation of caption extraction device 1.

Furthermore, a program for realizing the functions of character recognition section 1c, character processing section 1g, voice synthesis section 1h, color information extraction section 1k, keyword judgment section 11 and control section In shown in FIG. 1 may be recorded into a computer-readable recording medium, the program recorded onto this recording medium may be read by a computer system, and each process in caption extraction device 1 may be performed by executing that program. Furthermore, a "computer system" referred to here includes an operation system (OS), peripheral equipment and other hardware.

In addition, a "computer-readable recording medium" refers to a portable medium such as a flexible disc, magneto-optical disc, ROM or CD-ROM, or a hard disk or other storage device contained within a computer system. Moreover, a "computer-readable recording medium" includes that which retains a program for a fixed period of time in the manner of volatile memory (RAM) within a computer system that serves as a server or client in the case a program is transmitted via a network such as the Internet or a communication line such as a telephone line.

In addition, the above-mentioned program may be transmitted from a computer system that contains this program in a storage device and so forth to another computer system via a transmission medium or by a transmission wave within a transmission medium. Here, the "transmission medium" that transmits a program refers to a medium having a function that transmits information in the manner of a network (communication network) such as the Internet or a communication line such as a telephone line.

In addition, the above-mentioned program may also be that for realizing a portion of the above functions. Moreover, it may also be a so-called differential file (differential program) capable of realizing the above functions by combining with a program previously recorded in a computer system.

Although the above has provided a detailed description of embodiments of the present invention with reference to the drawings, its concrete constitution is not limited to these embodiments, and constitutions are also included within a scope that does not deviate from the gist of the present invention.

## Claims

1. A caption extraction device that extracts caption information from video signals, comprising:
a caption extraction unit which extracts superimposed captions from video signals actually broadcast or played back;
a character recognition unit which recognizes character strings contained in the extracted superimposed captions on a real-time basis, and outputs character information containing character codes corresponding to the recognized character strings; and
a display unit which displays the character strings based on the character information.

2. The caption extraction device according to claim 1, wherein all of the units are built in a single housing.

3. The caption extraction device according to claim 1, further comprising an input/output unit that is capable of connecting with at least one peripheral device or external communication environment.

4. The caption extraction device according to claim 1, further comprising a character processing unit that adds additional information for processing the recognized character strings by enlarging, deforming or coloring and so forth to the character information.

5. The caption extraction device according to claim 4, wherein the caption extraction device is a separate entity from a display device such as a television receiver that displays video contents according to video signals.

6. The caption extraction device according to claim 1, further comprising a voice synthesis unit that synthesizes a voice from character codes recognized by the character recognition unit and outputs synthesized voice signals.

7. The caption extraction device according to claim 6, further comprising a color information extraction unit that acquires color information of the superimposed captions,
wherein the voice synthesis unit synthesizes a voice so as to distinguish among men, women, adults, children or elderly persons and so forth either based on the color information of superimposed captions acquired with the color information extraction unit, or based on characters and symbols pre-inserted into superimposed captions which are recognized with the character recognition unit.

8. The caption extraction device according to claim 6, wherein the voice synthesis unit performs voice synthesis that gives characteristics similar to the characteristics of voices output when the superimposed captions are displayed.

9. The caption extraction device according to claim 3, wherein the character information is imparted to a Braille output unit to provide a Braille output.

10. The caption extraction device according to claim 9, wherein the Braille output unit is a Braille keyboard.

11. The caption extraction device according to claim 9, wherein the Braille output unit is a Braille printer.

12. The caption extraction device according to claim 3, further comprising a judgment unit that automatically determines scenes in which a specified keyword appears by searching for the specified keyword from among the character information.

13. The caption extraction device according to claim 12, further comprising a control unit that records the time of appearance of a scene in which the keyword was detected by the judgment unit onto a recording unit.

14. The caption extraction device according to claim 12, further comprising a control unit that records a scene in which the keyword has been detected by the judgment unit onto a picture recording unit.

15. The caption extraction device according to claim 3, further comprising a control unit that controls a unit for outputting character information in response to the detection of a predetermined character string.

16. The caption extraction device according to claim 15, wherein the predetermined character string is a program starting character string or program ending character string, and the control unit imparts a command to perform programmed recording or recording a program to a picture recording unit in accordance with the predetermined character string.

17. The caption extraction device according to claim 15, wherein the predetermined character string is an address or postal number, and the control unit causes the address or the postal number to be printed out by a printing unit.

18. The caption extraction device according to claim 17, wherein the predetermined character string is a postal number, and when the postal number is detected, the control unit searches and acquires an address corresponding to the postal number in an address database that is correlated with postal numbers, and causes the acquired address to be printed out by a printing unit.

19. The caption extraction device according to claim 15, wherein the caption extraction device together with being connectable to the Internet, the predetermined character string is a uniform resource locator (URL), and when the URL is detected, the control unit accesses the web page corresponding to the URL and displays the contents of the web page on the display unit.

20. The caption extraction device according to claim 15, wherein the caption extraction device together with being connectable to a telephone, the predetermined character string is a telephone number, and when the telephone number is detected, the control unit calls the telephone of the telephone number.
